(19) Europäisches Patentamt
European Patent Office
Office européen des brevets

(11) **EP 3 584 555 B1**

(12) **EUROPEAN PATENT SPECIFICATION**

(45) Date of publication and mention
of the grant of the patent:
**27.05.2020 Bulletin 2020/22**

(51) Int Cl.:
***G01K 17/10*** *(2006.01)*

(21) Application number: **18178433.1**

(22) Date of filing: **19.06.2018**

(54) **FLUX CALORIMETER**

FLUSSKALORIMETER

CALORIMÈTRE DE FLUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.12.2019 Bulletin 2019/52**

(73) Proprietor: **Siemens Aktiengesellschaft
80333 München (DE)**

(72) Inventors:
 • **Glöckle, Steffen
  76297 Stutensee (DE)**

 • **Oßwald, Sven
  70343 Fellbach (DE)**
 • **Schmanau, Mike
  76316 Malsch (DE)**
 • **Wetzel, Martin
  76437 Rastatt (DE)**

(74) Representative: **Maier, Daniel Oliver
Siemens AG
Postfach 22 16 34
80506 München (DE)**

(56) References cited:
**EP-A1- 1 070 940    DE-A1-102007 015 609
US-B1- 7 775 706**

EP 3 584 555 B1

## Description

Background

The present disclosure relates to a flux calorimeter with automated estimation of a fluid type. More specifically, the present disclosure focuses on a flux calorimeter wherein a value of thermal conductivity is estimated.

Fluid circuits such as circuits for heating, ventilation and/or air-conditioning frequently make use of flux calorimeters. A flux calorimeter measures a supply temperature at its inlet as well as a return temperature at its outlet. The difference between these temperatures is assigned to a temperature drop. In addition, a flow rate of a fluid flowing through the calorimeter is determined. A quantitative measure of heat flux can then be estimated as a function of the product between flow rate and temperature drop.

An accurate estimate of heat flux requires knowledge of the specific heat of the fluid flowing through the flux calorimeter. That value of specific heat generally depends on the type of fluid. Circuits for heating, ventilation and/or air conditioning commonly employ blended formulations of water and of glycol as well as blended formulations of potassium formate and water. The patent application WO97/14763A1, heat flux liquid, was filed on 16 October 1996 and was published on 24 April 1997. WO97/14763A1 discloses a liquid for use in ventilation and air conditioning installations, the liquid containing 15% to 35% of potassium formate and 65% to 85% of water.

Another patent application WO98/49532A1, calorimeter for fluid flows, was filed on 27 April 1998. Publication of WO98/49532A1 took place on 5 November 1998. WO98/49532A1 deals with monitoring solar plants. To that end, a measurement apparatus with temperature probes 11 and 12 is employed. A flow rate through the apparatus is determined using a flow rate sensor 20. The flow rate may also be derived from measurements of temperature rise at the locations of probes 11 and 12. WO98/49532A1 teaches determination of heat flux that accounts for the temperature dependence of specific heat.

Yet another patent application DE102007015609A1, heating or cooling counter device for determining the energy consumption in a temperature controlling loop, was filed in Germany on 29 March 2007. The same patent application was published on 9 October 2008. DE102007015609A1 discloses a measurement apparatus 2 with ultrasonic transducers 4 for determining flow rates. The measurement apparatus 2 also comprises a pair of temperature probes 9 for recording the temperature drop between the supply end and the return end. The temperature probes 9 as well as the ultrasonic flow rate sensors 4 connect to a controller 12.

The measurement apparatus 2 of DE102007015609A1 provides a micro-anemometer 13.

The micro-anemometer 13 is arranged in between the supply end and the return end and also connects to the controller 12. An estimate k related to specific heat is obtained from the values recorded by the micro-anemometer 13. The micro-anemometer 13 thus allows values of k to be factored into an estimate of heat flux.

In accordance with DE102007015609A1, paragraph 48, a temperature rise is recorded as a function of a predetermined amount of power supplied to a heater 15. DE102007015609A1 does not teach recording an amount of power as a function of a predetermined temperature rise.

An application 12/499,420 for a US patent was filed on 8 July 2009. A patent US 7,775,706 B1 was issued in respect of the application 12/499,420 on 17 August 2010. US 7,775,706 B1 teaches a compensated heat energy meter comprising an inlet temperature sensor (20), an outlet temperature sensor (22), a flow rate sensor, a heater (24) and a controller (26, 70). The specific heat (k-factor) of the working fluid (12) is determined by measuring the amount of energy which needs to be provided to the heater (24) in order to attain a predetermined temperature change between inlet and outlet temperature sensors (20, 22). The heat flux is calculated from said specific heat, the flow rate and the inlet/outlet temperature change.

The instant disclosure improves on flux calorimeters for heating, ventilation and/or air-conditioning installations. These flux calorimeters can estimate heat flux for a range of liquids employed in heating, ventilation and/or air-conditioning installations.

Summary

The present disclosure aims at providing a flux calorimeter that classifies a type of a mixture flowing through the flux meter. The type of a mixture is then factored into a determination of heat flux in a tempering circuit. To that end, a pair of temperature transducers is provided as well as a heater. At least one of the temperature transducers records the response of the system to an excitation originating from the heater. An amount of energy dissipated in order to heat the mixture and/or an amount of time required to attain a given set point is then used to classify the mixture. In contrast to earlier solution, the classification is not based on a temperature rise caused by a predetermined amount of heating.

The instant disclosure thus teaches a cooling or heating estimation device for estimating a heat flux in a tempering circuit containing a mixture comprising of two liquids with different boiling points, in particular a water-glycol mixture, the cooling or heating estimation device comprising a controller and a flow measurement device for recording a flow signal indicative of a flow rate of the mixture, the flow measurement device being configured to transmit the flow signal to the controller; wherein the cooling or heating estimation device comprises a heater arranged in the tempering circuit and a first and

3      **EP 3 584 555 B1**      4

a second temperature transducer, the heater and the temperature transducers each being communicatively coupled to the controller; the controller being configured to: read a first reference temperature signal from the first temperature transducer; produce a temperature set point; control the heater to attain the temperature set point at the second temperature transducer; record a quantity associated with controlling the heater, the recorded quantity being indicative of:

- an amount of time required to attain and/or reach the temperature set point; or
- an amount of energy required to attain and/or reach the temperature set point; and employ the flow signal and the recorded quantity to estimate the heat flux in the tempering circuit;

characterized in that:
the produced temperature set point is the lowest of the boiling points, in particular the boiling point of water in the case of a water-glycol mixture.

It is also an object of the instant disclosure to provide a flux calorimeter and a method for estimating heat flux that enables classification of a type of a mixture contained in a tempering circuit during installation and/or during commissioning.

It is another object of the instant disclosure to provide a flux calorimeter and a method for estimating heat flux that enables an assessment of chemical and/or physical degradation of a mixture contained in a tempering circuit.

It is a further object of the instant disclosure to provide a flux calorimeter and a method for estimating heat flux that enables classification of a type of a mixture whilst the mixture does not circulate in the tempering circuit.

It is a related object of the instant disclosure to provide a flux calorimeter and a method for estimating heat flux that enables classification of a type of a mixture whilst the mixture does circulate in the tempering circuit.

It is a related object of the instant disclosure to provide a flux calorimeter and a method for estimating heat flux that can be retro-fitted to and/or applied to existing installations.

Brief description of the drawings

Various features will become apparent to those skilled in the art from the following detailed description of the disclosed non-limiting embodiments. The drawings that accompany the detailed description can be briefly described as follows:

FIG 1 is a schematic view of a flux calorimeter according to the instant disclosure.

FIG 2 provides a schematic view of a flux calorimeter with a heater element disposed near a supply end.

FIG 3 provides a schematic view of a flux calorimeter with a thermal mass flow sensor inside an enclosure.

FIG 4 shows a neural network for fluid classification.

Detailed decription

The flux calorimeter of the instant disclosure is typically part of an installation for heating, ventilation and/or air conditioning. According to an aspect of the instant disclosure, a plurality of such flux calorimeters is arranged in an installation for heating, ventilation and/or air conditioning. The flux calorimeter according to the instant disclosure can be used as a heat meter and also as a cooling meter.

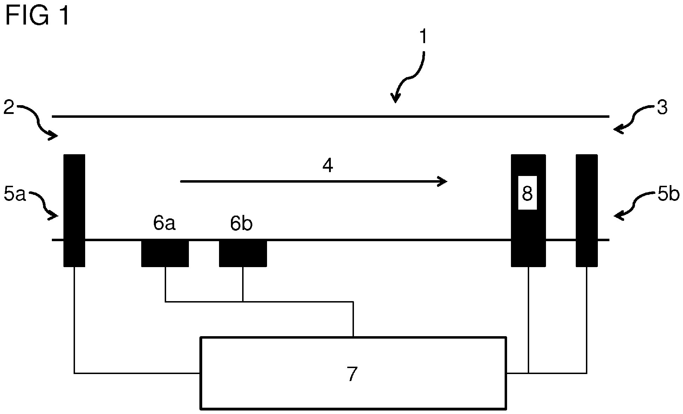

The flux calorimeter 1 as shown in FIG 1 has an inlet 2 and an outlet 3. One of ordinary skill in the art upon reviewing this disclosure understands that the flux calorimeter 1 is not limited to a single inlet 2 and not limited to a single outlet 3, and may provide a plurality of inlets ports and/or a plurality of outlet ports. A fluid path extends from the inlet 2 to the outlet 3 of the flux calorimeter 1. An arrow 4 indicates a direction of fluid flow along the fluid path of the flux calorimeter of FIG 1. A heat exchanger is typically arranged in the fluid path between the inlet 2 and the outlet 3.

Inlet 2 provides a supply end for supply of a fluid to the flux calorimeter 1. Likewise, outlet 3 provides a return end. A fluid such as water and/or a blend thereof, in particular a blend of water and of at least one compound selected from

- calcium chloride,
- ethanol,
- ethylene glycol,
- glycerol,
- magnesium chloride,
- methanol,
- potassium acetate,
- potassium formate,
- propylene glycol, or
- sodium chloride

thus enters the flux calorimeter 1 via inlet 2, then flows in the direction indicated by arrow 4 and leaves via outlet 3. The fluid entering via inlet 2 and leaving via outlet 3 may as well be a combustible fluid and/or a

- R-401A,
- R-404A,
- R-406A,
- R-407A,
- R-407C,
- R-408A,
- R-409A,
- R-410A,
- R-438A,
- R-500, or

- R-502

refrigerant. The above lists are not exhaustive.

A first temperature sensor 5a is arranged at or near the inlet 2. The first temperature sensor 5a functions to record a signal indicative of a supply temperature at or near the supply end of flux calorimeter 1. A second temperature sensor 5b is arranged at or near the outlet 3. The second temperature sensor 5b functions to record a signal indicative of a return temperature at or near the return end of flux calorimeter 1. It is envisaged that at least one of the temperature sensors 5a, 5b is or comprises a PT100 element and/or at PT1000 element and/or a negative thermal coefficient (NTC) element and/or a positive thermal coefficient (PTC) element. It is also envisaged that a fibre optical sensor is employed to record a signal indicative of temperature.

A flow rate meter 6a, 6b is arranged at or near the fluid path. The flow rate meter 6a, 6b functions to record a signal indicative of a flow rate of a fluid flowing along the fluid path. According to an aspect, the flow rate meter 6a, 6b comprises a pair of ultrasonic transducers 6a, 6b. According to another aspect, the flow rate meter 6a, 6b is or comprises a vortex flow meter. According to yet another aspect, the flow rate meter 6a, 6b operates in an anemometric manner.

A controller 7 communicatively couples to the temperature sensors 5a, 5b and to the flow rate meter 6a, 6b. In an embodiment, controller 7 is a microprocessor. In an alternate embodiment, controller 7 is a microcontroller.

The connections between sensors 5a, 5b, 6a, 6b and controller 7 are at least unidirectional. The controller 7 is thus operable to read signals originating from these sensors 5a, 5b, 6a, 6b.

It is envisaged that controller 7 provides one analog-to-digital converter or several analog-to-digital converters that change analog readings obtained from the sensors 5a, 5b, 6a, 6b into digital representations of these readings. Advantageously, at least one analog-to-digital converter of controller 7 provides delta-sigma modulation. An analog-to-digital converter with delta-sigma modulation generally reduces noise of signals obtained from sensors 5a, 5b, 6a, 6b.

It is envisaged that at least one of these analog-to-digital converters, in particular at least one analog-to-digital converter providing delta-sigma modulation, is an integral part of controller 7. That is, controller 7 and at least one analog-to-digital converter, in particular at least one analog-to-digital converter providing delta-sigma modulation, are arranged in the same chip, preferably on the same system on a chip (SoC). Controllers 7 with integrated analog-to-digital converters, in particular with integrated analog-to-digital converter providing delta-sigma modulation, yield more compact solutions.

Controller 7 also provides a processing unit, in particular an arithmetic logic unit. It is envisaged that the processing unit, in particular the arithmetic logic unit, is an integral part of controller 7. That is, controller 7 and its processing unit, in particular its arithmetic logic unit, are arranged in the same chip, preferably on the same system on a chip (SoC). Controllers 7 with integrated processing units, in particular with integrated arithmetic logic units, yield more compact solutions.

The processing unit and the analog-to-digital converter(s) enable controller 7 to process signals indicative of temperature into measures of temperature. The processing unit and the analog-to-digital converter(s) also enable controller 7 to process signals indicative of flow rate into measures of flow rate.

The processing unit further functions to produce an estimate and/or a measure of heat flux. In so doing, the processing unit, in particular the arithmetic logic unit, determines a temperature drop $\Delta T_{SR}$ between the supply end 2 and the return end 3 of the flux calorimeter 1. That is, the processing unit, in particular the arithmetic logic unit, determines and/or calculates a difference $\Delta T_{SR}$ between a measure of supply temperature $T_S$ and a measure of return temperature $T_R$:

$$\Delta T_{SR} = T_S - T_R$$

The processing unit, in particular the arithmetic logic unit, then multiplies the temperature drop $\Delta T_{SR}$ with the measure of flow rate $\varphi$ to obtain a measure and/or an estimate of heat flux P:

$$P = k \times \Delta T_{SR} \times \varphi$$

The non-zero value k maps the product $\Delta T_{SR} \times \varphi$ to the heat flux $P$. The value k generally depends on fluid temperatures and accounts for the specific heat of the fluid in the fluid path of flux calorimeter 1. A heater 8 is arranged in the fluid channel adjacent the return temperature sensor 5b. That is, the heater 8 is arranged at or near the outlet 3 of the flux calorimeter 1. In an embodiment, the heater 8 is a hot-wire device. In an alternate embodiment, a light source such as a laser is employed to supply the heater 8 with energy.

The heater 8 is also communicatively coupled to the controller 7. The connection between heater 8 and controller 7 is at least unidirectional. The controller 7 is thus operable to transmit signals to the heater 8.

With the heater 8 being a hot-wire device, the controller 7 may comprise a digital-to-analog converter. The digital-to-analog converter changes a digital signal into an electric current to be supplied to the hot-wire device 8. According to an aspect, the digital-to-analog converter is an integral component of the controller 7. That is, the digital-to-analog converter and the controller 7 are arranged in the same chip, preferably on the same system on a chip (SoC).

Given that the resistivity R of the hot-wire device 8 is ohmic, the hot-wire device 8 will dissipate an amount of power $P_{el}$ that is proportional to the square of the current I through the hot-wire device 8:

$$P_{el} = R \times I^2$$

An amplifier such as an operational amplifier may be employed to suitably amplify the electric current produced by the digital-to-analog converter. That amplifier would typically be connected in between the digital-to-analog converter and the hot-wire device 8.

The controller 7 may as well produce a pulse-width modulated signal to drive an electric current through the heater 8. An amplifier such as an operational amplifier may again be employed to suitably amplify the pulse-width modulated electric current produced by the controller 7. That amplifier would typically be connected in between the digital-to-analog converter and the hot-wire device 8.

The arrangement shown on FIG 1 enables an estimate of thermal conductivity $\lambda$ in accordance with a first approach. This measurement of thermal conductivity $\lambda$ is derived from a technique known as constant temperature anemometry (CTA). Constant temperature anemometry is based on a constant temperature of a temperature probe such as transducer 5b. An amount of heat dissipated by the heater 8 is thus controlled to maintain a constant temperature recorded by transducer 5b. According to an aspect, controller 7 employs proportional and integral (PI) or proportional and integral and derivative (PID) control to maintain a set point at transducer 5b. The skilled person derives suitable proportional, integral and/or derivative parameter when implementing the control loop. It is envisaged that the skilled person employs self-adaptive control to maintain constant temperature at transducer 5b.

An estimate of heat conductivity $\lambda(T)$ requires at least two recordings of constant, but different, temperatures $T_1$ and $T_2$ at the location of transducer 5b. A value of heat conductivity $\lambda(T)$ can then be estimated using the relationship between dissipated power P and a temperature drop across the heater $\Delta T_8$

$$P = \lambda(T) \times (a + b \times Pr^{0.33} \times v^{-0.5} \times v^{0.5} \times K) \times \Delta T_8,$$

$$K = (Pr_F/Pr_W)^{0.25}$$

wherein a and b and K are constants, $Pr$ denotes the Prandtl number, v denotes kinematic viscosity, $Pr_F$ denotes the Prandtl number of the fluid at fluid temperature, and $Pr_W$ denotes the Prandtl number of the fluid at the temperature of an enclosure.

Thermal conductivity $\lambda(T)$ is advantageously determined at zero fluid velocity, i.e. $v = 0$. The above relationship then reads

$$P = \lambda(T) \times a \times \Delta T_8.$$

According to an aspect, the temperature at the location of transducer 5b is kept constant during at least one second, preferably during at least two seconds, yet more preferably during at least five seconds. Long durations at temperatures $T_1$ and $T_2$ yield more accurate values of dissipated power and hence more accurate values of thermal conductivity $\lambda(T)$. Ideally, the same durations apply whilst recording the first temperature $T_1$ and the second temperature $T_2$. In an embodiment, temperatures $T_1$ and $T_2$ are kept constant within $\pm 0.5$ Kelvin, preferably within $\pm 0.2$ Kelvin, yet more preferably within $\pm 0.1$ Kelvin.

It is also envisaged to record power consumption at more than two constant, but different, temperatures $T_1$ and $T_2$. Values of power consumption can, by way of non-limiting example, be recorded at five constant, but mutually different, temperatures or even at ten constant, but mutually different, temperatures. Higher numbers of recorded values yield more accurate estimates of heat conductivity $\lambda(T)$. In a particular embodiment, an estimate of heat conductivity $\lambda(T)$ is determined by regression analysis, in particular by linear regression.

A second approach to estimating heat conductivity $\lambda(T)$ leverages differences in boiling temperature of a mixture of fluids. The second approach resembles a technique known as differential scanning calorimetry (DSC). In a mixture of two fluids W and G with different boiling points $T_W$ and $T_G$, controller 7 raises the output of heater 8. The output of heater 8 increases until a signal from temperature transducer 5b indicates that one of the boiling points $T_W$ or $T_G$ is reached. As the temperature of the mixture approaches the lowest of the boiling points $T_w$ and $T_G$, power dissipation increases disproportionately with temperature. That disproportionate increase in power dissipation is caused by the vaporization enthalpy of the fluid that corresponds to the lowest of the boiling points $T_W$ and $T_G$. The disproportionate increase in power dissipated by heater 8 is also proportional to the amount of fluid with the lowest of the boiling points $T_W$ and $T_G$. The relative content of the fluid with the lowest of the boiling points $T_W$ and $T_G$ can thus be estimated from an increase in power dissipated by heater 8 at the respective boiling point.

It is envisaged that the flux calorimeter 1 comprises an additional pressure sensor. Since the boiling point of a fluid generally depends on pressure, the additional pressure sensor can be employed to improve on the accuracy of the measurement.

In an embodiment, the fluid is a binary mixture of water and of ethylene glycol. Water at atmospheric pressure of 1013 hPa exhibits a boiling point of $T_w = 373$ K. Ethylene glycol at atmospheric pressure of 1013 hPa exhibits a boiling point of $T_G$ = 470 K. Accordingly, the lower of the two boiling points is reached at 373 K. The power output of heater 8 thus increases until a signal from temperature probe 5b indicates or approaches a temperature of 373 K. A disproportionate increase in power dissipated by heater 8 with temperature can then be registered due to the vaporization enthalpy of water. Finally, that increase in dissipated power is mapped to the content of water in the binary mixture of water and of ethylene glycol.

A third approach to estimating heat conductivity $\lambda(T)$ works similar to temperature rise tests of power apparatuses such as power transformers. The approach is based on the physical properties of the heat equation

$$\frac{dT}{dt} = \frac{\lambda}{c_p \times \rho} \nabla^2 T,$$

wherein $c_p$ denotes specific heat capacity and $\rho$ denotes mass density. This partial differential equation describes the spatial ($\nabla^2$) and temporal (d/dt) distribution of temperature T in a fluid with thermal conductivity $\lambda(T)$, with specific heat $c_p$ and with mass density $\rho$. The coefficient

$$\alpha = \frac{\lambda}{c_p \times \rho} = \frac{1}{R \times c_p \times \rho}$$

is also known as thermal diffusivity. The thermal conductivity $\lambda(T)$ = 1/R determines the response in the time domain of the system to dynamic impulse. In other words, the inverse R of thermal conductivity $\lambda(T)$ plays a role similar to the role of a resistor in a resistive capacitive RC circuit. The system thus exhibits attenuating behaviour in response to a (dynamic) impulse. A (dynamic) impulse can, by way of non-limiting example, be produced by modulating an over temperature of heater 8.

In an embodiment, a given amount of output power is applied to heater 8. At least two, preferably at least five, yet more preferably at least ten temperature signals $T_i$ are then recorded at transducer 5b together with their respective time values $t_i$. A curve of temperature T versus time t

$$T(t) = T_0 \times \exp(-t/\alpha)$$

is fitted to the temperature signals $T_i$ recorded at time values $t_i$. The curve fit produces an estimate of a constant $T_0$ as well as an estimate of thermal diffusivity $\alpha$. The value of thermal diffusivity $\alpha$ can be looked up in a lookup table and be mapped to a particular blend of fluids. Alternatively, a particular blend of fluids is determined from thermal diffusivity $\alpha$ using linear interpolation.

The first approach and the third approach are presented not as embodiments of the invention but as background art or examples useful for understanding the invention.

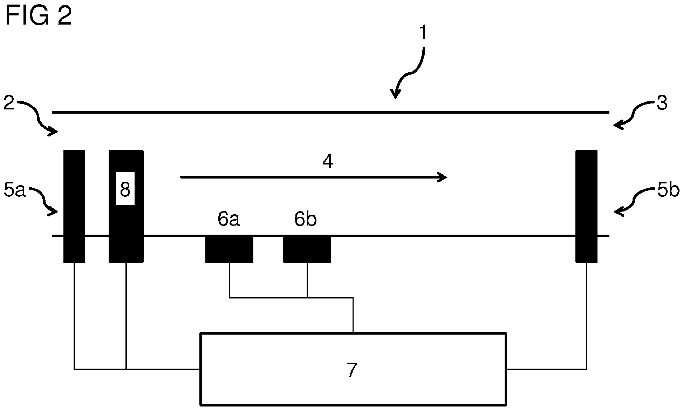

Now turning to FIG 2, a flux calorimeter 1 is depicted with a heater 8 disposed at or near the inlet 2 of the flux calorimeter 1. Accordingly, the heater 8 is arranged in the fluid channel adjacent the supply temperature sensor 5a. In an embodiment, the heater 8 is a hotwire device. In an alternate embodiment, a light source such as a laser is employed to supply the heater 8 with energy.

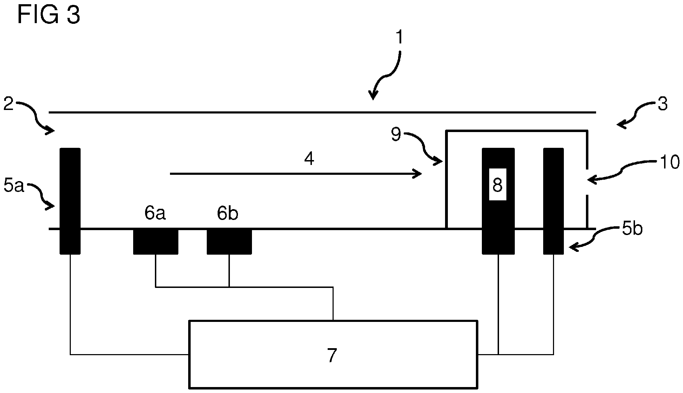

Now referring to FIG 3, a flux calorimeter 1 is shown with a heater 8 and a return temperature sensor 5b inside a common enclosure 9. An aperture 10 enables fluid communication between the inside of enclosure 9 and the fluid channel extending between the inlet 2 and the outlet 3. The enclosure 9 as shown on FIG 3 provides an upstream side pointing in the direction of inlet 2. The enclosure 9 also provides a downstream side pointing in the direction of outlet 3. The at least one aperture 10 is advantageously arranged on the downstream side of the enclosure 9. That is, the aperture 10 points in the direction of outlet 3. An aperture 10 arranged on the downstream side of enclosure 9 inhibits ingress of particles into the enclosure 9. Particles dissolved in the fluid flowing through the fluid channel bypass the enclosure 9 rather than enter inside the enclosure 9 via downstream aperture 10.

In an embodiment, the at least one aperture 10 provides a diameter dimension of 1 mm, preferably of 0.5 mm, yet more preferably of 0.2 mm. Small diameters confer advantages in terms of isolation the inside of enclosure 9 from particles and/or from turbulence.

It is envisaged that the at least one aperture 10 is a through-hole, preferably a cylindrical through-hole. A cylindrical or substantially cylindrical aperture 10 confers benefits in terms of low manufacturing cost, since such apertures 10 can be manufactured via drilling. It is also envisaged that the at least one aperture 10 provides a quadratic, a rectangular or a polygonal cross-section.

The inside of enclosure 9 is in fluid communication with the fluid channel. Yet, the inside of enclosure 9 is also substantially isolated from other portions of the fluid channel. That way, fluid velocity inside the enclosure is reduced to zero or to substantially zero. In other words, any impact of fluid velocity von the result of fluid classification is largely inhibited.

In an embodiment, the aperture 10 comprises a filter. The filter improves on isolation of the inside of enclosure 9 from other portions of the fluid channel.

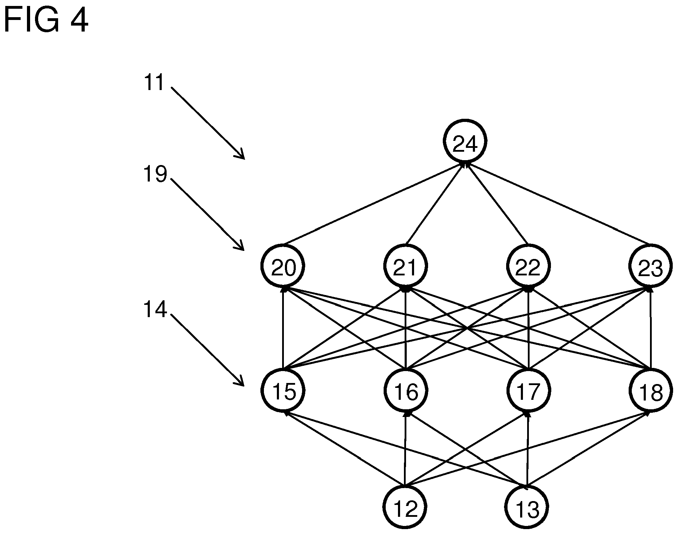

In an embodiment, controller 7 implements a neural network such as the network 11 shown on FIG 4. The neural network 11 comprises at least an input neuron 12 that corresponds to (is associated with) a value of dissipated heat. The neural network 11 also comprises at least an input neuron 13 that corresponds to (is associated with) a value indicative of temperature. It is envisaged that the neural network 11 comprises additional input neurons for historical values of dissipated heat and/or temperature.

Any input to the neural network 11 is ideally normalized. The neural network 11 also comprises an output neuron 24 indicative of fluid type. According to an aspect, a value produced by output neuron of 0 indicates the fluid is water whilst an output value of 1 indicates the fluid is ethylene glycol. It is also envisaged that the neural network 11 comprises separate output neurons for water content and for (ethylene) glycol content.

The neural network also comprises a number of hidden layers 14, 19, each layer 14, 19 having a number of hidden neurons 15 - 18, 20 - 23. In an embodiment, the neural network comprises a single layer of hidden neurons. In another embodiment, the neural network comprises two layers 14, 19 of hidden neurons. The neurons may, by way of non-limiting example, have sigmoid and/or hyperbolic tangent and/or step-wise activation and/or rectified exponential linear unit functions. The neurons 15 - 18, 20 - 23 are advantageously biased. The neural network 11 is ideally trained under test conditions. A series of measurements obtained under various test conditions is employed to train the network 11.

The neural network 11 may, by way of example, be trained by a supervised training algorithm such as backpropagation. It is also envisaged that neural network 11 is trained using an evolutionary algorithm such as a genetic algorithm. The skilled artisan may actually combine training algorithms. A genetic algorithm may, by way of example, be employed to find a coarse estimate of the weights of the connections of neural network 11. A backpropagation algorithm is then employed to further improve on the performance of the network 11.

After training the configuration of neural network 11 and/or the weights of the connections of neural network 11 are saved in a memory of or associated with controller 7. The configuration of the neural network 11 and/or the weights of the connections of the neural network 11 as a whole then define a fluid classification scheme employed by flux calorimeter 1.

It is also envisaged that a recurrent neural network is employed rather than the feed-forward network 11 shown on FIG 4. Recurrent neural networks confer benefits in terms of factoring in historical values of dissipated heat and/or historical values of temperature.

According to an aspect, flux calorimeter 1 or a part thereof is manufactured via an additive manufacturing technique such as three-dimensional printing.

Parts of the flux calorimeter 1 or parts of a method according to the present disclosure may be embodied in hardware, in a software module executed by a processor, or by a cloud computer, or by a combination thereof. The software may include a firmware, a hardware driver run in the operating system, or an application program. Thus, the disclosure also relates to a computer program product for performing the operations presented herein. If implemented in software, the functions described may be stored as one or more instructions on a computer-readable medium. Some examples of storage media that may be used include random access memory (RAM), magnetic RAM, read only memory (ROM), flash memory, EPROM memory, EEPROM memory, registers, a hard disk, a removable disk, other optical disks, a millipede® device, or any available media that can be accessed by a computer or any other IT equipment or appliance.

In an embodiment, a water-glycol mixture is a mixture of water and of ethylene glycol.

The cooling or heating estimation device (5a, 5b, 6a, 6b, 7, 8) according to the instant disclosure may estimate the heat flux in the tempering circuit as well as determine the heat flux in the tempering circuit or gauge the heat flux in the tempering circuit.

It is envisaged that the aforementioned controller (7) is configured to record and/or measure a quantity associated with controlling the heater (8), the recorded and/or measured quantity being selected from:

- an amount of time required to attain and/or reach the temperature set point; or
- an amount of energy required to attain and/or reach the temperature set point.

In an embodiment of the instant disclosure, the cooling or heating estimation device (5a, 5b, 6a, 6b, 7, 8) comprises an anemometric sensor means (5a, 5b, 8), the anemometric sensor means (5a, 5b, 8) comprising:

    the heater (8);
    at least one of the first temperature transducer (5a; 5b) or the second temperature transducer (5b; 5a).

In another embodiment of the instant disclosure, the cooling or heating estimation device (5a, 5b, 6a, 6b, 7, 8) comprises an anemometric sensor means (5a, 5b, 8), the anemometric sensor means (5a, 5b, 8) comprising:

    the heater (8);
    the first temperature transducer (5a; 5b) and the second temperature transducer (5b; 5a).

It is also envisaged that the controller (7) comprises a clock, the controller (7) being configured to:

    employ the clock to record and/or to estimate and/or to measure an amount of time required to attain and/or to reach the temperature set point;
    the recorded and/or estimated and/or measured quantity being the recorded and/or estimated and/or measured amount of time.

It is also envisaged that the controller (7) comprises a power meter, the controller (7) being configured to:

    employ the power meter to record and/or to estimate and/or to measure an amount of energy required to attain and/or to reach the temperature set point;

the recorded and/or estimated and/or measured quantity being the recorded and/or estimated and/or measured amount of energy.

It is also envisaged that the cooling or heating estimation device (5a, 5b, 6a, 6b, 7, 8) comprises a power meter for recording and/or estimating and/or measuring power transmitted to the heater (8), the power meter being communicatively coupled to the controller (7), the controller (7) being configured to:

> read an amount of energy required to attain and/or to reach the temperature set point from the power meter;
> the recorded and/or estimated and/or measured quantity being the amount of energy read from the power meter.

The first temperature transducer (5a; 5b) and the second temperature transducer (5b; 5a) are ideally arranged in the tempering circuit.
It is envisaged that the cooling or heating estimation device (5a, 5b, 6a, 6b, 7, 8) is a cooling or heating gauging device (5a, 5b, 6a, 6b, 7, 8) or a cooling or heating metering device (5a, 5b, 6a, 6b, 7, 8).
The controller (7) ideally is configured to record a measured quantity associated with controlling the heater (8), the recorded and/or measured quantity being indicative of or being selected from:

- an amount of time required to attain and/or reach the temperature set point; or
- an amount of energy required to attain and/or reach the temperature set point; and
  employ the flow signal and the recorded measured quantity to estimate the heat flux in the tempering circuit.

The controller (7) may, in an embodiment, measure a quantity associated with controlling the heater (8), the recorded and/or measured quantity being indicative of or being selected from:

- an amount of time required to attain and/or to reach the temperature set point; or
- an amount of energy required to attain and/or to reach the temperature set point; and
  employ the flow signal and the measured quantity to estimate the heat flux in the tempering circuit.

The controller (7) is preferably configured to produce a temperature set point as a function of the first reference temperature signal.
As described in details herein, the instant disclosure teaches any of the aforementioned cooling or heating estimation devices (5a, 5b, 6a, 6b, 7, 8), wherein the controller (7) is configured to produce the temperature set point as a function of the first reference temperature signal by determining and/or producing a first reference temperature from the reference temperature signal; and by adding a predetermined increment to the first reference temperature to produce the temperature set point.
The predetermined increment preferably is less than 5.0 Kelvin, yet more preferably less than 2.0 Kelvin, still more preferably less than 1.0 Kelvin. Small predetermined increments yield energy savings.
According to the present invention, the controller (7) is configured to produce the temperature set point; the produced temperature set point being the boiling point of water.
The instant disclosure further teaches any of the aforementioned cooling or heating estimation devices (5a, 5b, 6a, 6b, 7, 8), wherein the controller (7) is configured to produce the temperature set point; the produced temperature set point being the boiling point of water at atmospheric pressure of 1013 hPa.
The instant disclosure still further teaches any of the aforementioned cooling or heating estimation devices (5a, 5b, 6a, 6b, 7, 8),
wherein the heating metering device (5a, 5b, 6a, 6b, 7, 8) comprises a pressure transducer configured to record a pressure signal indicative of ambient pressure;
wherein the controller (7) is configured to:

> read the pressure signal indicative of ambient pressure from the pressure transducer;
> produce an ambient pressure from the pressure signal;
> look up the boiling point of water for the produced ambient pressure; and
> produce the temperature set point, the produced temperature set point being the boiling point of water at the produced ambient pressure.

The controller (7) preferably comprises a (nonvolatile) memory storing a lookup table, the lookup table storing a plurality of values of ambient pressure and a value of a boiling point of water associated with each value of ambient pressure.
The controller (7) may also comprise a (nonvolatile) memory storing a boiling point curve, the boiling point curve mapping values of ambient pressure to values of boiling point of water or of another liquid. In an embodiment, the boiling point curve is a graphical curve. In an alternate embodiment, the boiling point curve is a mathematical relationship.
The instant disclosure still further teaches any of the aforementioned cooling or heating estimation devices (5a, 5b, 6a, 6b, 7, 8), wherein the controller (7) is configured to:

> record and/or measure a quantity associated with controlling the heater (8), the recorded and/or measured quantity being indicative of and/or selected from:

- an amount of time required to attain and/or to reach the temperature set point; or
- an amount of energy required to attain and/or to reach the temperature set point;

look up a type of mixture for the recorded and/or measured quantity; and

employ the flow signal and the type of mixture looked up to estimate the heat flux in the tempering circuit.

The controller (7) preferably comprises a (non-volatile) memory storing a lookup table, the lookup table storing a plurality of values of recorded and/or measured quantities and a type of a mixture associated with each recorded and/or measured quantity. The lookup table may, in particular, store a plurality of values of the recorded and/or measured quantity and a type of a water-glycol mixture or a type of a water-ethanol mixture associated with each recorded and/or measured quantity.

The instant disclosure also teaches any of the aforementioned cooling or heating estimation devices (5a, 5b, 6a, 6b, 7, 8), wherein the controller (7) comprises a non-volatile memory storing a classification curve, the classification curve classifying a type of mixture as a function of a recorded and/or measured quantity, the controller (7) being configured to:

record and/or measure a quantity associated with controlling the heater (8), the recorded and/or measured quantity being indicative of and/or selected from:

- an amount of time required to attain and/or to reach the temperature set point; or
- an amount of energy required to attain and/or to reach the temperature set point;

employ the classification curve to classify a type of mixture for the recorded and/or measured quantity; and

employ the flow signal and the classified type of mixture to estimate the heat flux in the tempering circuit.

It is envisaged that the classification curve is a graphical curve mapping recorded and/or measured quantities to types of mixtures. It is also envisaged that the classification curve is a mathematical relationship mapping recorded and/or measured quantities to types of mixtures.

The instant disclosure further teaches any of the aforementioned cooling or heating estimation devices (5a, 5b, 6a, 6b, 7, 8), wherein the controller (7) is configured to:

read a feedback signal from the second temperature transducer and control the heater (8) based on the feedback signal to attain and/or to reach the temperature set point at the second temperature transducer (5b; 5a).

The instant disclosure still further teaches any of the aforementioned cooling or heating estimation devices (5a, 5b, 6a, 6b, 7, 8), wherein the controller (7) is configured to:

produce a temperature set point;
read a feedback temperature signal from the second temperature transducer (5b; 5a);
produce an error signal as a function of the temperature set point and of the feedback temperature signal;
produce a control output signal as a function of the error signal, the control output signal being indicative of and/or specifying and/or indicating an amount of energy to be dissipated by the heater (8); and
transmit the control output signal to the heater (8).

The controller (7) is advantageously configured to produce the output signal using a set of proportional and integral parameters and/or a set of proportional and integral and derivative parameters. In an embodiment, the controller (7) employs self-adaptive control. That is, the control (7) functions to learn a set of proportional and integral parameters and/or functions to learn a set of proportional and integral and derivative parameters.

The instant disclosure also teaches any of the aforementioned cooling or heating estimation devices (5a, 5b, 6a, 6b, 7, 8), wherein the controller (7) is configured to:

control the heater (8) to attain and/or to reach the temperature set point at the second temperature transducer (5b; 5a) by
reading a feedback signal from the second temperature transducer (5b; 5a); and by producing a feedback temperature from the second temperature transducer (5b; 5a); and by
determining if the feedback temperature is within a predetermined margin from the temperature set point;
if the feedback temperature is within a predetermined margin from the temperature set point:

record and/or measure a quantity associated with controlling the heater (8), the recorded and/or measured quantity being indicative of and/or selected from:

- an amount of time required to attain and/or to reach the temperature set point; or
- an amount of energy required to attain and/or to reach the temperature set point; and

employ the flow signal and the recorded and/or measured quantity to estimate the heat flux in the tempering circuit.

The predetermined margin preferably is 1.0 Kelvin, yet more preferably 0.5 Kelvin, still more preferably 0.2 Kelvin or even 0.1 Kelvin. Smaller predetermined margins yield more accurate estimates of heat flux.

The controller (7) is ideally configured to calculate an error signal as a difference between the temperature set point and the feedback temperature signal. It is also envisaged that the controller (7) is configured to calculate an error signal as an absolute value of a difference between the temperature set point and the feedback temperature signal.

The instant disclosure further teaches any of the aforementioned cooling or heating estimation devices (5a, 5b, 6a, 6b, 7, 8),

wherein the flow measurement device (6a, 6b) is configured to record a flow signal indicative of a flow rate of the mixture through the tempering circuit; and

the flow measurement device (6a, 6b) is configured to operate in an ultrasonic flow metering manner or in a vortex flow metering manner or in a thermal mass flow monitoring manner.

It is envisaged that the flow measurement device comprises at least one ultrasonic transducer (6a; 6b). The at least one ultrasonic transducer (6a; 6b) is preferably mounted on the outside of a conduit of the tempering circuit. In an embodiment, the flow measurement device (6a, 6b) comprises a pair of ultrasonic transducers. The pair of ultrasonic transducers (6a, 6b) is preferably mounted on the outside of a conduit of the tempering circuit.

The instant disclosure still further teaches any of the aforementioned cooling or heating estimation devices (5a, 5b, 6a, 6b, 7, 8),

wherein the controller (7) comprises an output interface for data transmission to a remote controller;

the output interface being compatible with a predetermined communication bus protocol;

the controller (7) being configured to transmit the estimated and/or determined heat flux to the remote controller via the output interface using the predetermined communication bus protocol.

The instant disclosure still further teaches any of the aforementioned cooling or heating estimation devices (5a, 5b, 6a, 6b, 7, 8),

wherein the controller (7) comprises an input interface for receiving data from a remote controller;

the input interface being compatible with a predetermined communication bus protocol;

the controller (7) being configured to read details of a mixture comprising at least two liquids via the input interface using the predetermined communication bus protocol.

The output interface preferably is programmed with or is compatible with a predetermined communication bus protocol according to ISO 11898-1:2003 and/or according to IEEE 802.3ax, in particular according to 802.3af:2003 and/or according to 802.3at:2009 and/or according to 802.3bt:2017. The output interface may be programmed to be compatible with the predetermined communication bus protocol or provide hardware compatible with the predetermined communication bus protocol. The predetermined communication bus protocol preferably is a digital protocol. In an embodiment, the output interface and/or the communication bus protocol enables encrypted communication between the controller (7) and the remote controller. A Diffie-Hellman key exchange procedure with or without elliptic curves may be employed to encrypt communication between the controller (7) and the remote controller. The remote controller is advantageously installed in a location that is remote from the cooling or heating estimation device (5a, 5b, 6a, 6b, 7, 8).

According to another aspect, the output interface is a wireless output interface. The output interface may be programmed to be compatible with the predetermined communication bus protocol for wireless communication or provide hardware compatible with the predetermined communication bus protocol for wireless communication.

It is envisaged that the output interface also functions to harvest energy. To that end, output interface can, by way of non-limiting example, rectify currents (electromagnetically) induced in an antenna (comprised by the interface). According to an aspect, the cooling or heating estimation device (5a, 5b, 6a, 6b, 7, 8) comprises an energy buffer such as a (rechargeable) battery and stores energy harvested via the output interface in its energy buffer.

The instant disclosure still further teaches any of the aforementioned cooling or heating estimation devices (5a, 5b, 6a, 6b, 7, 8), wherein the cooling or heating estimation device (5a, 5b, 6a, 6b, 7, 8) comprises an output module communicatively coupled to the controller (7),

wherein the controller (7) is configured to transmit the estimated heat flux to the output module; and

wherein the output module comprises a display and is configured to produce information data on the estimated heat flux and to present the information data to an operator via the display.

In a particular embodiment, the output module visualizes the estimated heat flux. The output module can, by way of non-limiting example, be a printer and/or a suitable display. The suitable display can, by way of non-limiting example, be a monochrome display, a grayscale display, or a color screen with suitable resolution. Suitable resolutions include, but are not limited to, 426 x 320 pixels, 470 x 320 pixels, 640 x 480 pixels, or 960 x 720 pixels etc. The display can, for instance, be a liquid crystal screen, a cathode ray tube monitor, or a screen made of organic light-emitting diodes.

The instant disclosure also teaches a flux calorimeter (1) comprising a cooling or heating estimation device (5a, 5b, 6a, 6b, 7, 8) according to the instant disclosure,

the flux calorimeter (1) comprising an inlet (2) and an outlet (3) and a fluid path extending between the inlet (2)

and the outlet (3), the fluid path defining a downstream direction (4) of fluid flow from the inlet (2) to the outlet (3); wherein the second temperature transducer (5b) is arranged in the downstream direction (4) from the first temperature transducer (5a); wherein the controller (7) is configured to:

read an upstream temperature signal from the first temperature transducer (5a);
read a downstream temperature signal from the second temperature transducer (5b);
produce and/or calculate a temperature difference from the upstream temperature signal and from the downstream temperature signal; and
estimate and/or determine the heat flux in the tempering circuit as a function of the temperature difference and of the flow signal and of the recorded and/or measured quantity.

The controller (7) is preferably configured to estimate and/or determine the heat flux in the tempering circuit as a direct function of the temperature difference and of the flow signal and of the recorded and/or measured quantity, wherein direct functions have no dependencies other than the given arguments. That said, direct functions can depend on parameters such as natural constants.

The controller (7) is advantageously configured to calculate a temperature difference between the upstream temperature signal and the downstream temperature signal.

The instant disclosure further teaches a flux calorimeter (1) comprising a cooling or heating estimation device (5a, 5b, 6a, 6b, 7, 8) according to the instant disclosure, the flux calorimeter (1) comprising an inlet (2) and an outlet (3) and a fluid path extending between the inlet (2) and the outlet (3); wherein the metering device (5a, 5b, 6a, 6b, 7, 8) comprises an inlet temperature transducer (5a) and an outlet temperature transducer (5b); the inlet temperature transducer (5a) and the outlet temperature transducer (5b) being communicatively coupled to the controller (7); wherein the controller (7) is configured to:

read an inlet temperature signal from the inlet temperature transducer (5a);
read an outlet temperature signal from the outlet temperature transducer (5b);
produce a temperature difference from the inlet temperature signal and from the outlet temperature signal; and
estimate and/or determine the heat flux in the tempering circuit as a function of the temperature difference and of the flow signal and of the recorded and/or measured quantity.

The controller (7) is advantageously configured to calculate a temperature difference between the inlet temperature signal and the outlet temperature signal.

The inlet temperature transducer (5a) is disposed at or near the inlet (2) of the flux calorimeter (1). The inlet temperature transducer (5a) is preferably disposed less than 30 mm, yet more preferably less than 20 mm, still more preferably less then 10 mm from the inlet (2). Small distances between the locations of the inlet temperature transducer (5a) and the inlet (2) confer benefits in terms of accurate estimates of heat flux.

The outlet temperature transducer (5b) is disposed at or near the outlet (3) of the flux calorimeter (1). The outlet temperature transducer (5b) is preferably disposed less than 30 mm, yet more preferably less than 20 mm, still more preferably less then 10 mm from the outlet (3). Small distances between the locations of the outlet temperature transducer (5b) and the outlet (3) confer benefits in terms of accurate estimates of heat flux.

As disclosed in detail herein, the instant disclosure further teaches a method for estimating a heat flux in a tempering circuit containing a mixture of two liquids with different boiling points, in particular a water-glycol mixture, the method comprising the steps of:

recording and/or measuring a flow signal indicative of a flow rate of the mixture, in particular of a flow rate of the mixture through the tempering circuit;
reading a first reference temperature signal from a first temperature transducer (5a; 5b);
producing a temperature set point;
controlling a heater (8) to attain and/or to reach the temperature set point at a second temperature transducer (5b; 5a), the second temperature transducer (5b; 5a) being different from the first temperature transducer (5a; 5b);
recording and/or measuring a quantity associated with controlling the heater (8), the recorded and/or measured quantity being indicative of and/or selected from:

- an amount of time required to attain and/or to reach the temperature set point; or
- an amount of energy required to attain and/or to reach the temperature set point; and

employing the flow signal and the recorded and/or measured quantity to estimate the heat flux in the tempering circuit;
characterized in that:
the produced temperature set point is the lowest of the two boiling points, in particular the boiling point of water in the case of a water-glycol mixture.

The second temperature transducer (5b; 5a) is advantageously disposed at a second location in the tempering circuit; the first temperature transducer (5a; 5b) is advantageously disposed at a first location in the tempering circuit; the first location being different from the second location.

The instant disclosure still further teaches a tangible machine-readable medium having a set of instructions stored thereon that when executed by one or more processors cause the one or more processors to perform the aforementioned method.

Reference numerals

1 flux calorimeter
2 inlet
3 outlet
4 direction of fluid flow
5a, 5b temperature sensors
6a, 6b flow meter
7 controller
8 heater
9 common enclosure
10 aperture
11 neural network
12, 13 input neurons
14, 19 hidden layers
15 - 18 neurons
20 - 23 neurons
24 output neuron

**Claims**

1. A cooling or heating estimation device (5a, 5b, 6a, 6b, 7, 8) for estimating a heat flux in a tempering circuit containing a mixture of two liquids (W, G) with different boiling points ($T_W$, $T_G$), in particular a water-glycol mixture,
the cooling or heating estimation device (5a, 5b, 6a, 6b, 7, 8) comprising a controller (7) and a flow measurement device (6a, 6b) for recording a flow signal indicative of a flow rate of the mixture, the flow measurement device (6a, 6b) being configured to transmit the flow signal to the controller (7);
wherein the cooling or heating estimation device (5a, 5b, 6a, 6b, 7, 8) comprises a heater (8) arranged in the tempering circuit and a first (5a; 5b) and a second (5b; 5a) temperature transducer, the heater (8) and the temperature transducers (5a; 5b) each being communicatively coupled to the controller (7);
the controller (7) being configured to:

   read a first reference temperature signal from the first temperature transducer (5a; 5b);
   produce a temperature set point;
   control the heater (8) to attain the temperature set point at the second temperature transducer (5b; 5a);
   record a quantity associated with controlling the heater (8), the recorded quantity being indicative of:

   - an amount of time required to attain the temperature set point; or
   - an amount of energy required to attain the temperature set point; and

employ the flow signal and the recorded quantity to estimate the heat flux in the tempering circuit;
**characterized in that**:
the produced temperature set point is the lowest of the two boiling points ($T_W$, $T_G$), in particular the boiling point of water ($T_W$) in the case of a water-glycol mixture.

2. The cooling or heating estimation device (5a, 5b, 6a, 6b, 7, 8) according to claim 1,
wherein the controller (7) is configured to produce the temperature set point as a function of the first reference temperature signal by
producing a first reference temperature from the reference temperature signal; and by
adding a predetermined increment to the first reference temperature to produce the temperature set point.

3. The cooling or heating estimation device (5a, 5b, 6a, 6b, 7, 8) according to any of the claims 1 to 2, wherein the controller (7) is configured to:

   record a quantity associated with controlling the heater (8), the recorded quantity being indicative of:

      - an amount of time required to attain the temperature set point; or
      - an amount of energy required to attain the temperature set point;

   look up a type of mixture for the recorded quantity; and
   employ the flow signal and the type of mixture looked up to estimate the heat flux in the tempering circuit.

4. The cooling or heating estimation device (5a, 5b, 6a, 6b, 7, 8) according to any of the claims 1 to 3, wherein the controller (7) comprises a non-volatile memory storing a classification curve, the classification curve classifying a type of mixture as a function of a recorded quantity, the controller (7) being configured to:

   record a quantity associated with controlling the heater (8), the recorded quantity being indicative of:

      - an amount of time required to attain the temperature set point; or
- an amount of energy required to attain the temperature set point;

employ the classification curve to classify a type of mixture for the recorded quantity; and
employ the flow signal and the classified type of mixture to estimate the heat flux in the tempering circuit.

5. The cooling or heating estimation device (5a, 5b, 6a, 6b, 7, 8) according to any of the claims 1 to 4, wherein the controller (7) is configured to:
read a feedback signal from the second temperature transducer and control the heater (8) based on the feedback signal to attain the temperature set point at the second temperature transducer (5b; 5a).

6. The cooling or heating estimation device (5a, 5b, 6a, 6b, 7, 8) according to any of the claims 1 to 5, wherein the controller (7) is configured to:

produce a temperature set point;
read a feedback temperature signal from the second temperature transducer (5b; 5a);
produce an error signal as a function of the temperature set point and of the feedback temperature signal;
produce a control output signal as a function of the error signal, the control output signal being indicative of an amount of energy to be dissipated by the heater (8); and
transmit the control output signal to the heater (8).

7. The cooling or heating estimation device (5a, 5b, 6a, 6b, 7, 8) according to any of the claims 1 to 6, wherein the controller (7) is configured to:

control the heater (8) to attain the temperature set point at the second temperature transducer (5b; 5a) by
reading a feedback signal from the second temperature transducer (5b; 5a); and by producing a feedback temperature from the second temperature transducer (5b; 5a); and by
determining if the feedback temperature is within a predetermined margin from the temperature set point;
if the feedback temperature is within a predetermined margin from the temperature set point:

record a quantity associated with controlling the heater (8), the recorded quantity being indicative of:

- an amount of time required to attain the temperature set point; or

- an amount of energy required to attain the temperature set point; and

employ the flow signal and the recorded quantity to estimate the heat flux in the tempering circuit.

8. The cooling or heating estimation device (5a, 5b, 6a, 6b, 7, 8) according to any of the claims 1 to 7, wherein the flow measurement device (6a, 6b) is configured to record a flow signal indicative of a flow rate of the mixture through the tempering circuit; and the flow measurement device (6a, 6b) is configured to operate in an ultrasonic flow metering manner or in a vortex flow metering manner or in a thermal mass flow monitoring manner.

9. The cooling or heating estimation device (5a, 5b, 6a, 6b, 7, 8) according to any of the claims 1 to 8, wherein the controller (7) comprises an output interface for data transmission to a remote controller; the output interface being compatible with a predetermined communication bus protocol; the controller (7) being configured to transmit the estimated heat flux to the remote controller via the output interface using the predetermined communication bus protocol.

10. The cooling or heating estimation device (5a, 5b, 6a, 6b, 7, 8) according to any of the claims 1 to 9, wherein the cooling or heating estimation device (5a, 5b, 6a, 6b, 7, 8) comprises an output module communicatively coupled to the controller (7), wherein the controller (7) is configured to transmit the estimated heat flux to the output module; and wherein the output module comprises a display and is configured to produce information data on the estimated heat flux and to present the information data to an operator via the display.

11. A flux calorimeter (1) comprising a cooling or heating estimation device (5a, 5b, 6a, 6b, 7, 8) according to any of the previous claims, the flux calorimeter (1) comprising an inlet (2) and an outlet (3) and a fluid path extending between the inlet (2) and the outlet (3), the fluid path defining a downstream direction (4) of fluid flow from the inlet (2) to the outlet (3); wherein the second temperature transducer (5b) is arranged in the downstream direction (4) from the first temperature transducer (5a); wherein the controller (7) is configured to:

read an upstream temperature signal from the first temperature transducer (5a);
read a downstream temperature signal from the second temperature transducer (5b);
produce a temperature difference from the upstream temperature signal and from the downstream temperature signal; and
estimate the heat flux in the tempering circuit as a function of the temperature difference and of the flow signal and of the recorded quantity.

12. A flux calorimeter (1) comprising a cooling or heating estimation device (5a, 5b, 6a, 6b, 7, 8) according to any of the claims 1 to 10,
the flux calorimeter (1) comprising an inlet (2) and an outlet (3) and a fluid path extending between the inlet (2) and the outlet (3);
wherein the metering device (5a, 5b, 6a, 6b, 7, 8) comprises an inlet temperature transducer (5a) and an outlet temperature transducer (5b); the inlet temperature transducer (5a) and the outlet temperature transducer (5b) being communicatively coupled to the controller (7);
wherein the controller (7) is configured to:

> read an inlet temperature signal from the inlet temperature transducer (5a);
> read an outlet temperature signal from the outlet temperature transducer (5b);
> produce a temperature difference from the inlet temperature signal and from the outlet temperature signal; and
> estimate the heat flux in the tempering circuit as a function of the temperature difference and of the flow signal and of the recorded quantity.

13. A method for estimating a heat flux in a tempering circuit containing a mixture of two liquids (W, G) with different boiling points ($T_W$, $T_G$), in particular a water-glycol mixture, the method comprising the steps of:

> recording a flow signal indicative of a flow rate of the mixture;
> reading a first reference temperature signal from a first temperature transducer (5a; 5b);
> producing a temperature set point;
> controlling a heater (8) to attain the temperature set point at a second temperature transducer (5b; 5a), the second temperature transducer (5b; 5a) being different from the first temperature transducer (5a; 5b);
> recording a quantity associated with controlling the heater (8), the recorded quantity being indicative of:
>
> > - an amount of time required to attain the temperature set point; or
> > - an amount of energy required to attain the temperature set point; and
>
> employing the flow signal and the recorded quantity to estimate the heat flux in the tempering circuit;

**characterized in that**:
the produced temperature set point is the lowest of the two boiling points ($T_W$, $T_G$), in particular the boiling point of water ($T_W$) in the case of a water-glycol mixture.

14. A tangible machine-readable medium having a set of instructions stored thereon that when executed by one or more processors cause the cooling or heating estimation device (5a, 5b, 6a, 6b, 7, 8) according to claim 1 to perform the method according to claim 13.

**Patentansprüche**

1. Kühl- oder Heiz-Schätzvorrichtung (5a, 5b, 6a, 6b, 7, 8) zum Schätzen eines Wärmedurchflusses in einem Temperierungskreislauf, der eine Mischung zweier Flüssigkeiten (W, G) mit verschiedenen Siedepunkten ($T_W$, $T_G$), insbesondere eine Wasser-Glykol-Mischung, enthält,
wobei die Kühl- oder Heiz-Schätzvorrichtung (5a, 5b, 6a, 6b, 7, 8) eine Steuereinheit (7) und eine Durchflussmessvorrichtung (6a, 6b) zum Aufzeichnen eines Durchflusssignals, das eine Durchflussrate der Mischung angibt, umfasst, wobei die Durchflussmessvorrichtung (6a, 6b) konfiguriert ist, das Durchflusssignal an die Steuereinheit (7) zu senden;
wobei die Kühl- oder Heiz-Schätzvorrichtung (5a, 5b, 6a, 6b, 7, 8) ein Heizgerät (8), das in dem Temperierungskreislauf angeordnet ist, und einen ersten (5a; 5b) und einen zweiten (5b; 5a) Temperaturwandler umfasst, wobei das Heizgerät (8) und die Temperaturwandler (5a; 5b) jeweils kommunikationstechnisch an die Steuereinheit (7) gekoppelt sind;
wobei die Steuereinheit (7) konfiguriert ist zum:

> Lesen eines ersten Referenztemperatursignals von dem ersten Temperaturwandler (5a; 5b);
> Erzeugen eines Temperatureinstellpunkts;
> Steuern des Heizgeräts (8), um den Temperatureinstellpunkt bei dem zweiten Temperaturwandler (5b; 5a) zu erreichen;
> Aufzeichnen einer Größe, die dem Steuern des Heizgeräts (8) zugeordnet ist, wobei die aufgezeichnete Größe Folgendes angibt:
>
> > - einen Zeitbetrag, der erforderlich ist, um den Temperatureinstellpunkt zu erreichen; oder
> > - eine Energiemenge, die erforderlich ist, um den Temperatureinstellpunkt zu erreichen; und
>
> Verwenden des Durchflusssignals und der aufgezeichneten Größe, um den Wärmedurchfluss in dem Temperierungskreislauf zu schätzen;

**dadurch gekennzeichnet, dass**:
der erzeugte Temperatureinstellpunkt der niedrigste der beiden Siedepunkte ($T_W$, $T_G$), insbesondere in dem Fall einer Wasser-Glykol-Mischung der Siedepunkt von Wasser ($T_W$), ist.

2.  Die Kühl- oder Heiz-Schätzvorrichtung (5a, 5b, 6a, 6b, 7, 8) nach Anspruch 1,
    wobei die Steuereinheit (7) konfiguriert ist, den Temperatureinstellpunkt als eine Funktion des ersten Temperaturreferenzsignals durch Folgendes zu erzeugen:

    Erzeugen einer ersten Referenztemperatur aus dem Referenztemperatursignal; und durch Hinzufügen einer vorbestimmten Erhöhung zu der ersten Referenztemperatur, um den Temperatureinstellpunkt zu erzeugen.

3.  Die Kühl- oder Heiz-Schätzvorrichtung (5a, 5b, 6a, 6b, 7, 8) nach einem der Ansprüche 1 bis 2,
    wobei die Steuereinheit (7) zum
    Aufzeichnen einer Größe, die dem Steuern des Heizgeräts (8) zugeordnet ist, konfiguriert ist, wobei die aufgezeichnete Größe Folgendes angibt:

    - einen Zeitbetrag, der erforderlich ist, um den Temperatureinstellpunkt zu erreichen; oder
    - eine Energiemenge, die erforderlich ist, um den Temperatureinstellpunkt zu erreichen;

    Nachschlagen eines Typs der Mischung für die aufgezeichnete Größe; und
    Verwenden des Durchflusssignals und des nachgeschlagenen Typs der Mischung, um den Wärmedurchfluss in dem Temperierungskreislauf zu schätzen.

4.  Die Kühl- oder Heiz-Schätzvorrichtung (5a, 5b, 6a, 6b, 7, 8) nach einem der Ansprüche 1 bis 3, wobei die Steuereinheit (7) einen nicht flüchtigen Speicher umfasst, der eine Einordnungskurve speichert, wobei die Einordnungskurve einen Typ einer Mischung als eine Funktion einer aufgezeichneten Größe einordnet, wobei die Steuereinheit (7) konfiguriert ist zum:

    Aufzeichnen einer Größe, die dem Steuern des Heizgeräts (8) zugeordnet ist, wobei die aufgezeichnete Größe Folgendes angibt:

    - einen Zeitbetrag, der erforderlich ist, um den Temperatureinstellpunkt zu erreichen; oder
    - eine Energiemenge, die erforderlich ist, um den Temperatureinstellpunkt zu erreichen;

Verwenden der Einordnungskurve, um einen Typ der Mischung für die aufgezeichnete Größe einzuordnen; und
Verwenden des Durchflusssignals und des eingeordneten Typs der Mischung, um den Wärmedurchfluss in dem Temperierungskreislauf zu schätzen.

5.  Die Kühl- oder Heiz-Schätzvorrichtung (5a, 5b, 6a, 6b, 7, 8) nach einem der Ansprüche 1 bis 4, wobei die Steuereinheit (7) konfiguriert ist zum:
    Lesen eines Rückmeldesignals von dem zweiten Temperaturwandler und Steuern des Heizgeräts (8) anhand des Rückmeldesignals, um den Temperatureinstellpunkt an dem zweiten Temperaturwandler (5b; 5a) zu erreichen.

6.  Die Kühl- oder Heiz-Schätzvorrichtung (5a, 5b, 6a, 6b, 7, 8) nach einem der Ansprüche 1 bis 5, wobei die Steuereinheit (7) konfiguriert ist zum:

    Erzeugen eines Temperatureinstellpunkts;
    Lesen eines Rückmeldetemperatursignals von dem zweiten Temperaturwandler (5b; 5a);
    Erzeugen eines Fehlersignals als eine Funktion des Temperatureinstellpunkts und des Rückmeldetemperatursignals;
    Erzeugen eines Steuerausgangssignals als eine Funktion des Fehlersignals, wobei das Steuerausgangssignal eine Energiemenge angibt, die durch das Heizgerät (8) zu dissipieren ist; und
    Senden des Steuerausgangssignals an das Heizgerät (8).

7.  Die Kühl- oder Heiz-Schätzvorrichtung (5a, 5b, 6a, 6b, 7, 8) nach einem der Ansprüche 1 bis 6, wobei die Steuereinheit (7) konfiguriert ist zum:

    Steuern des Heizgeräts (8), den Temperatureinstellpunkt an dem zweiten Temperaturwandler (5b; 5a) zu erreichen, durch:

    Lesen eines Rückmeldesignals von dem zweiten Temperaturwandler (5b; 5a); und durch
    Erzeugen einer Rückmeldetemperatur von dem zweiten Temperaturwandler (5b; 5a); und durch
    Bestimmen, ob die Rückmeldetemperatur innerhalb einer vorbestimmten Spanne vom Temperatureinstellpunkt ist;
    dann, wenn die Rückmeldetemperatur innerhalb einer vorbestimmten Spanne vom Temperatureinstellpunkt ist:

    Aufzeichnen einer Größe, die dem Steuern des Heizgeräts (8) zugeordnet ist, wobei die aufgezeichnete Größe Folgendes angibt:

- einen Zeitbetrag, der erforderlich ist, um den Temperatureinstellpunkt zu erreichen; oder
- eine Energiemenge, die erforderlich ist, um den Temperatureinstellpunkt zu erreichen; und

Verwenden des Durchflusssignals und der aufgezeichneten Größe, um den Wärmedurchfluss in dem Temperierungskreislauf zu schätzen.

8. Die Kühl- oder Heiz-Schätzvorrichtung (5a, 5b, 6a, 6b, 7, 8) nach einem der Ansprüche 1 bis 7, wobei die Durchflussmessvorrichtung (6a, 6b) konfiguriert ist, ein Durchflusssignal aufzuzeichnen, das eine Durchflussrate der Mischung durch den Temperierungskreislauf angibt; und die Durchflussmessvorrichtung (6a, 6b) konfiguriert ist, in einer Ultraschalldurchflussmessweise oder in einer Vortexdurchflussmessweise oder in einer Weise einer Überwachung des thermischen Massendurchflusses zu arbeiten.

9. Die Kühl- oder Heiz-Schätzvorrichtung (5a, 5b, 6a, 6b, 7, 8) nach einem der Ansprüche 1 bis 8, wobei die Steuereinheit (7) eine Ausgangsschnittstelle für eine Datenübertragung an eine entfernte Steuereinheit umfasst; wobei die Ausgangsschnittstelle mit einem vorbestimmten Kommunikationsbusprotokoll kompatibel ist; wobei die Steuereinheit (7) konfiguriert ist, den geschätzten Wärmedurchfluss an die entfernte Steuereinheit über die Ausgangsschnittstelle unter Verwendung des vorbestimmten Kommunikationsbusprotokolls zu senden.

10. Die Kühl- oder Heiz-Schätzvorrichtung (5a, 5b, 6a, 6b, 7, 8) nach einem der Ansprüche 1 bis 9, wobei die Kühl- oder Heiz-Schätzvorrichtung (5a, 5b, 6a, 6b, 7, 8) ein Ausgabemodul umfasst, das an die Steuereinheit (7) kommunikationstechnisch gekoppelt ist, wobei die Steuereinheit (7) konfiguriert ist, den geschätzten Wärmedurchfluss an das Ausgabemodul zu senden; und wobei das Ausgabemodul eine Anzeige umfasst und konfiguriert ist, Informationsdaten über den geschätzten Wärmedurchfluss zu erzeugen und die Informationsdaten für eine Bedienperson über die Anzeige darzustellen.

11. Durchflusskalorimeter (1), das eine Kühl- oder Heiz-Schätzvorrichtung (5a, 5b, 6a, 6b, 7, 8) nach einem der vorhergehenden Ansprüche umfasst, wobei das Durchflusskalorimeter (1) einen Einlass (2) und einen Auslass (3) und einen Fluidweg, der sich zwischen dem Einlass (2) und dem Auslass (3) erstreckt, umfasst, wobei der Fluidweg eine Stromabwärtsrichtung (4) eines Fluiddurchflusses von dem Einlass (2) zu dem Auslass (3) definiert; wobei der zweite Temperaturwandler (5b) in der Stromabwärtsrichtung (4) von dem ersten Temperaturwandler (5a) angeordnet ist; wobei die Steuereinheit (7) konfiguriert ist zum:

Lesen eines Stromaufwärtstemperatursignals von dem ersten Temperaturwandler (5a); Lesen eines Stromabwärtstemperatursignals von dem zweiten Temperaturwandler (5b); Erzeugen eines Temperaturunterschieds von dem Stromaufwärtstemperatursignal und von dem Stromabwärtstemperatursignal; und Schätzen des Wärmedurchflusses in dem Temperierungskreislauf als eine Funktion des Temperaturunterschieds und des Durchflusssignals und der aufgezeichneten Größe.

12. Durchflusskalorimeter (1), das eine Kühl- oder Heiz-Schätzvorrichtung (5a, 5b, 6a, 6b, 7, 8) nach einem der Ansprüche 1 bis 10 umfasst, wobei das Durchflusskalorimeter (1) einen Einlass (2) und einen Auslass (3) und einen Fluidweg, der sich zwischen dem Einlass (2) und dem Auslass (3) erstreckt, umfasst; wobei die Messvorrichtung (5a, 5b, 6a, 6b, 7, 8) einen Einlasstemperaturwandler (5a) und einen Auslasstemperaturwandler (5b) umfasst; wobei der Einlasstemperaturwandler (5a) und der Auslasstemperaturwandler (5b) an die Steuereinheit (7) kommunikationstechnisch gekoppelt sind; wobei die Steuereinheit (7) konfiguriert ist zum:

Lesen eines Einlasstemperatursignals von dem Einlasstemperaturwandler (5a); Lesen eines Auslasstemperatursignals von dem Auslasstemperaturwandler (5b); Erzeugen eines Temperaturunterschieds von dem Einlasstemperatursignal und dem Auslasstemperatursignal; und Schätzen des Wärmedurchflusses in dem Temperierungskreislauf als eine Funktion des Temperaturunterschieds und des Durchflusssignals und der aufgezeichneten Größe.

13. Verfahren zum Schätzen eines Wärmedurchflusses in einem Temperierungskreislauf, der eine Mischung zweier Flüssigkeiten (W, G) mit verschiedenen Siedetemperaturen ($T_W$, $T_G$), insbesondere eine Wasser-Glykol-Mischung, enthält, wobei das Verfahren die folgenden Schritte umfasst:

Aufzeichnen eines Durchflusssignals, das eine Durchflussrate der Mischung angibt;

Lesen eines ersten Referenztemperatursignals von einem ersten Temperaturwandler (5a; 5b); Erzeugen eines Temperatureinstellpunkts; Steuern eines Heizgeräts (8), um den Temperatureinstellpunkt an einem zweiten Temperaturwandler (5b; 5a) zu erreichen, wobei der zweite Temperaturwandler (5b; 5a) von dem ersten Temperaturwandler (5a; 5b) verschieden ist; Aufzeichnen einer Größe, die dem Steuern des Heizgeräts (8) zugeordnet ist, wobei die aufgezeichnete Größe Folgendes angibt:

- einen Zeitbetrag, der erforderlich ist, um den Temperatureinstellpunkt zu erreichen; oder
- eine Energiemenge, die erforderlich ist, um den Temperatureinstellpunkt zu erreichen; und

Verwenden des Durchflusssignals und der aufgezeichneten Größe, um den Wärmedurchfluss in dem Temperierungskreislauf zu schätzen; **dadurch gekennzeichnet, dass**: der erzeugte Temperatureinstellpunkt der niedrigste der beiden Siedepunkte ($T_W$, $T_G$) , insbesondere in dem Fall einer Wasser-Glykol-Mischung der Siedepunkt von Wasser ($T_W$), ist.

14. Greifbares maschinenlesbares Medium mit einer auf ihm gespeicherten Gruppe von Anweisungen, die dann, wenn sie durch einen oder mehrere Prozessoren ausgeführt werden, bewirken, dass die Kühl- oder Heiz-Schätzvorrichtung (5a, 5b, 6a, 6b, 7, 8) nach Anspruch 1 das Verfahren nach Anspruch 13 ausführt.


**Revendications**

1. Dispositif d'estimation de refroidissement ou de chauffage (5a, 5b, 6a, 6b, 7, 8) pour estimer un flux de chaleur dans un circuit de thermorégulation contenant un mélange de deux liquides (W, G) ayant différents points d'ébullition ($T_W$, $T_G$), en particulier un mélange eau-glycol, le dispositif d'estimation de refroidissement ou de chauffage (5a, 5b, 6a, 6b, 7, 8) comprenant un contrôleur (7) et un dispositif de mesure de débit (6a, 6b) pour enregistrer un signal de débit indicatif d'un débit du mélange, le dispositif de mesure de débit (6a, 6b) étant configuré pour transmettre le signal de débit au contrôleur (7) ; dans lequel le dispositif d'estimation de refroidissement ou de chauffage (5a, 5b, 6a, 6b, 7, 8) comprend un élément chauffant (8) agencé dans le circuit de thermorégulation et un premier (5a ; 5b) et un second (5b ; 5a) transducteur de température, l'élément chauffant (8) et les transducteurs de température (5a ; 5b) étant chacun couplés en communication au contrôleur (7) ; le contrôleur (7) étant configuré pour :

lire un premier signal de température de référence à partir du premier transducteur de température (5a ; 5b) ; produire un point de consigne de température ; commander l'élément chauffant (8) pour atteindre le point de consigne de température au niveau du second transducteur de température (5b ; 5a) ; enregistrer une quantité associée à la commande de l'élément chauffant (8), la quantité enregistrée étant indicative :

- d'une quantité de temps requise pour atteindre le point de consigne de température ; ou
- d'une quantité d'énergie requise pour atteindre le point de consigne de température ; et

utiliser le signal de débit et la quantité enregistrée pour estimer le flux de chaleur dans le circuit de thermorégulation ; **caractérisé en ce que** : le point de consigne de température produit est le plus bas des deux points d'ébullition ($T_W$, $T_G$), en particulier le point d'ébullition de l'eau ($T_W$) dans le cas d'un mélange eau-glycol.

2. Le dispositif d'estimation de refroidissement ou de chauffage (5a, 5b, 6a, 6b, 7, 8) selon la revendication 1, dans lequel le contrôleur (7) est configuré pour produire le point de consigne de température en fonction du premier signal de température de référence par la production d'une première température de référence à partir du signal de température de référence ; et par l'ajout d'un incrément prédéterminé à la première température de référence pour produire le point de consigne de température.

3. Le dispositif d'estimation de refroidissement ou de chauffage (5a, 5b, 6a, 6b, 7, 8) selon l'une quelconque des revendications 1 à 2, dans lequel le contrôleur (7) est configuré pour :

enregistrer une quantité associée à la commande de l'élément chauffant (8), la quantité enregistrée étant indicative :

- d'une quantité de temps requise pour atteindre le point de consigne de température ; ou

- d'une quantité d'énergie requise pour atteindre le point de consigne de température ;

rechercher un type de mélange pour la quantité enregistrée ; et

utiliser le signal de débit et le type de mélange recherché pour estimer le flux de chaleur dans le circuit de thermorégulation.

4. Le dispositif d'estimation de refroidissement ou de chauffage (5a, 5b, 6a, 6b, 7, 8) selon l'une quelconque des revendications 1 à 3, dans lequel le contrôleur (7) comprend une mémoire non volatile stockant une courbe de classification, la courbe de classification classant un type de mélange en fonction d'une quantité enregistrée, le contrôleur (7) étant configuré pour :

enregistrer une quantité associée à la commande de l'élément chauffant (8), la quantité enregistrée étant indicative :

- d'une quantité de temps requise pour atteindre le point de consigne de température ; ou
- d'une quantité d'énergie requise pour atteindre le point de consigne de température ;

utiliser la courbe de classification pour classer un type de mélange pour la quantité enregistrée ; et
utiliser le signal de débit et le type de mélange classé pour estimer le flux de chaleur dans le circuit de thermorégulation.

5. Le dispositif d'estimation de refroidissement ou de chauffage (5a, 5b, 6a, 6b, 7, 8) selon l'une quelconque des revendications 1 à 4, dans lequel le contrôleur (7) est configuré pour :
lire un signal de rétroaction à partir du second transducteur de température et commander l'élément chauffant (8) sur la base du signal de rétroaction pour atteindre le point de consigne de température au niveau du second transducteur de température (5b ; 5a).

6. Le dispositif d'estimation de refroidissement ou de chauffage (5a, 5b, 6a, 6b, 7, 8) selon l'une quelconque des revendications 1 à 5, dans lequel le contrôleur (7) est configuré pour :

produire un point de consigne de température ;
lire un signal de température de rétroaction à partir du second transducteur de température (5b ; 5a) ;
produire un signal d'erreur en fonction du point de consigne de température et du signal de température de rétroaction ;
produire un signal de sortie de commande en fonction du signal d'erreur, le signal de sortie de commande étant indicatif d'une quantité d'énergie à dissiper par l'élément chauffant (8) ; et
transmettre le signal de sortie de commande à l'élément chauffant (8).

7. Le dispositif d'estimation de refroidissement ou de chauffage (5a, 5b, 6a, 6b, 7, 8) selon l'une quelconque des revendications 1 à 6, dans lequel le contrôleur (7) est configuré pour :

commander l'élément chauffant (8) pour atteindre le point de consigne de température au niveau du second transducteur de température (5b ; 5a) par
la lecture d'un signal de rétroaction à partir du second transducteur de température (5b ; 5a) ; et par
la production d'une température de rétroaction à partir du second transducteur de température (5b ; 5a) ; et par
la détermination permettant de savoir si la température de rétroaction est à l'intérieur d'une marge prédéterminée par rapport au point de consigne de température ;
si la température de rétroaction est à l'intérieur d'une marge prédéterminée par rapport au point de consigne de température :

enregistrer une quantité associée à la commande de l'élément chauffant (8), la quantité enregistrée étant indicative :

- d'une quantité de temps requise pour atteindre le point de consigne de température ; ou
- d'une quantité d'énergie requise pour atteindre le point de consigne de température ; et

utiliser le signal de débit et la quantité enregistrée pour estimer le flux de chaleur dans le circuit de thermorégulation.

8. Le dispositif d'estimation de refroidissement ou de chauffage (5a, 5b, 6a, 6b, 7, 8) selon l'une quelconque des revendications 1 à 7,
dans lequel le dispositif de mesure de débit (6a, 6b) est configuré pour enregistrer un signal de débit indicatif d'un débit du mélange à travers le circuit de thermorégulation ; et
le dispositif de mesure de débit (6a, 6b) est configuré pour fonctionner d'une manière à mesure de débit par ultrasons ou d'une manière à mesure de débit tourbillonnaire ou d'une manière à surveillance de débit massique thermique.

9. Le dispositif d'estimation de refroidissement ou de chauffage (5a, 5b, 6a, 6b, 7, 8) selon l'une quelconque des revendications 1 à 8,
dans lequel le contrôleur (7) comprend une interface de sortie pour une transmission de données à un contrôleur distant ;
l'interface de sortie étant compatible avec un protocole de bus de communication prédéterminé ;
le contrôleur (7) étant configuré pour transmettre le flux de chaleur estimé au contrôleur distant via l'interface de sortie à l'aide du protocole de bus de communication prédéterminé.

10. Le dispositif d'estimation de refroidissement ou de chauffage (5a, 5b, 6a, 6b, 7, 8) selon l'une quelconque des revendications 1 à 9, dans lequel le dispositif d'estimation de refroidissement ou de chauffage (5a, 5b, 6a, 6b, 7, 8) comprend un module de sortie couplé en communication au contrôleur (7),
dans lequel le contrôleur (7) est configuré pour transmettre le flux de chaleur estimé au module de sortie ; et
dans lequel le module de sortie comprend un afficheur et est configuré pour produire des données d'informations sur le flux de chaleur estimé et pour présenter les données d'informations à un opérateur via l'afficheur.

11. Calorimètre de flux (1) comprenant un dispositif d'estimation de refroidissement ou de chauffage (5a, 5b, 6a, 6b, 7, 8) selon l'une quelconque des revendications précédentes,
le calorimètre de flux (1) comprenant une entrée (2) et une sortie (3) et un passage de fluide s'étendant entre l'entrée (2) et la sortie (3), le passage de fluide définissant une direction vers l'aval (4) de débit de fluide de l'entrée (2) à la sortie (3) ;
dans lequel le second transducteur de température (5b) est agencé dans la direction vers l'aval (4) par rapport au premier transducteur de température (5a) ;
dans lequel le contrôleur (7) est configuré pour :

lire un signal de température amont à partir du premier transducteur de température (5a) ;
lire un signal de température aval à partir du second transducteur de température (5b) ;
produire une différence de température à partir du signal de température amont et du signal de température aval ; et
estimer le flux de chaleur dans le circuit de thermorégulation en fonction de la différence de température et du signal de débit et de la quantité enregistrée.

12. Calorimètre de flux (1) comprenant un dispositif d'estimation de refroidissement ou de chauffage (5a, 5b, 6a, 6b, 7, 8) selon l'une quelconque des revendications 1 à 10,
le calorimètre de flux (1) comprenant une entrée (2) et une sortie (3) et un passage de fluide s'étendant entre l'entrée (2) et la sortie (3) ;
dans lequel le dispositif de mesure (5a, 5b, 6a, 6b, 7, 8) comprend un transducteur de température d'entrée (5a) et un transducteur de température de sortie (5b) ; le transducteur de température d'entrée (5a) et le transducteur de température de sortie (5b) étant couplés en communication au contrôleur (7) ;
dans lequel le contrôleur (7) est configuré pour :

lire un signal de température d'entrée à partir du transducteur de température d'entrée (5a) ;
lire un signal de température de sortie à partir du transducteur de température de sortie (5b) ;
produire une différence de température à partir du signal de température d'entrée et du signal de température de sortie ; et
estimer le flux de chaleur dans le circuit de thermorégulation en fonction de la différence de température et du signal de débit et de la quantité enregistrée.

13. Procédé pour estimer un flux de chaleur dans un circuit de thermorégulation contenant un mélange de deux liquides (W, G) ayant différents points d'ébullition ($T_W$, $T_G$), en particulier un mélange eau-glycol,
le procédé comprenant les étapes de :

l'enregistrement d'un signal de débit indicatif d'un débit du mélange ;
la lecture d'un premier signal de température de référence à partir d'un premier transducteur de température (5a ; 5b) ;
la production d'un point de consigne de température ;
la commande d'un élément chauffant (8) pour atteindre le point de consigne de température au niveau d'un second transducteur de température (5b ; 5a), le second transducteur de température (5b ; 5a) étant différent du premier transducteur de température (5a ; 5b) ;
l'enregistrement d'une quantité associée à la commande de l'élément chauffant (8), la quantité enregistrée étant indicative :

- d'une quantité de temps requise pour atteindre le point de consigne de température ; ou
- d'une quantité d'énergie requise pour atteindre le point de consigne de température ; et

l'utilisation du signal de débit et de la quantité enregistrée pour estimer le flux de chaleur dans le circuit de thermorégulation ;

**caractérisé en ce que** :

le point de consigne de température produit est le plus bas des deux points d'ébullition ($T_W$, $T_G$), en particulier le point d'ébullition de l'eau ($T_W$) dans le cas d'un mélange eau-glycol.

14. Support tangible lisible par machine ayant un ensemble d'instructions stockées sur celui-ci qui, lorsqu'elles sont exécutées par un ou plusieurs processeurs, amènent le dispositif d'estimation de refroidissement ou de chauffage (5a, 5b, 6a, 6b, 7, 8) selon la revendication 1 à réaliser le procédé selon la revendication 13.

FIG 1

FIG 2

FIG 3

# FIG 4

## REFERENCES CITED IN THE DESCRIPTION

**Patent documents cited in the description**

- WO 9714763 A1
- WO 9849532 A1
- DE 102007015609 A1
- US 12499420 B
- US 7775706 B1